# EUROPEAN PATENT APPLICATION

(11) **EP 3 623 090 A1**
(43) Date of publication of application: **18.03.2020**
(21) Application number: 19196459.2
(22) Date of filing: 10.09.2019
(51) Int. Cl.: B23D 29/00, B23D 15/14, B23D 33/02, H02G 1/00

(54) **CUTTING TOOL**

(30) Priority: 12.09.2018 JP 2018170505; 02.08.2019 JP 2019142635
(71) Applicant: Maxell Izumi Co., Ltd., Nagano 399-8721 (JP)
(72) Inventor: HIRABAYASHI, Takahito, Matsumoto-shi, Nagano 399-8721 (JP)
(74) Representative: Mewburn Ellis LLP

(57) **Abstract**

A cutting tool (1) comprises a main body (2) and a tool head (3). The tool head (3) includes: a fixed jaw section (31) having a front end part to which a first die (41) is connected and fixed; a movable jaw section (32) having a front end part to which a second die (42) is provided, the second die (42) being rotatably connected to the fixed jaw section (31) by a connecting shaft (33); a blade body (43) being capable of cutting an object (90) to be cut, which is clamped between the first die (41) and the second die (42), by a pressing force of the piston (21); a spring (44) for biasing the first die (41) and the second die (42) in a direction of relatively moving close to each other; and a connecting section (45) connecting the blade body (43) to the piston (21). The connecting section (45) has a first guide roller (51), which is capable of contacting the fixed jaw section (31), and a second guide roller (52), which is capable of contacting the movable jaw section (32).

## Description

### Technical Field

The present invention relates to a cutting tool.

### Background Art

Conventionally, a cutting tool comprising a hydraulic cylinder, a link mechanism and a pair of scissors blades has been known (see Patent Literature 1: Japanese Laid-open Patent Publication No. H1-301011). Further, another cutting tool comprising a hydraulic cylinder, a guide groove and a press cutting blade, whose blade edge is formed into a crescent shape, has been known (see Non-patent Literature 1: "Cembre HYDRAULIC CUTTING TOOLS Code HT-TFC" Internet URL: http://cembre.com/product/details/40972).

### Citation List

### Patent Literature

[Patent Literature 1]
Japanese Laid-open Patent Publication No. H1-301011

### [Non-patent Literature]

[Non-patent Literature 1]
"Cembre HYDRAULIC CUTTING TOOLS Code HT-TFC" Internet URL: <http://cembre.com/product/details/40972>

### Summary of Invention

### Technical Problem

The cutting tool disclosed in Patent Literature 1 comprises the scissors blades, and the scissors blades, which are faced each other, are moved to shear the object (e.g., electric wire) to be cut. The scissors blades respectively equally cut the wire half at cutting-in points of blade edges, so a center part of a cut surface is convex. Therefore, the cutting tool cannot be used for cutting a trolley wire. On the other hand, in the cutting tool disclosed in Non-patent Literature 1, the press cutting blade press-cuts the object (e.g., electric wire) to be cut, and the press cutting blade is capable of perpendicularly the object with respect to an axial line thereof, so that the cutting tool can be suitably used for cutting a trolley wire.

A process of cutting a trolley wire with the cutting tool disclosed in Non-patent Literature 1 will be explained. Firstly, a locking handle and a main body are respectively held by a right hand and a left hand, and the locking handle is moved away from the main body to open dies, then a trolley wire is attached. Next, the locking handle is moved toward the main body so as to lock the dies, so that the dies cannot be opened. Further, a switch of the main body is pushed to actuate the hydraulic cylinder and push the press cutting blade, so that the trolley wire can be cut. As described above, in case of using the conventional cutting tools, the both hands must be used when opening the dies and attaching the trolley wire. Further, locking the dies after attaching the trolley wire must be performed with the both hands. Therefore, operability of the conventional cutting tools is poor, and the cutting tools are not so easy to handle. Further, by providing the locking handle, a size of a tool head must be large, so portability must be poor.

### Solution to Problem

The present invention has been invented to solve the above described problems. An object of the present invention is to provide a cutting tool capable of cutting an object to be cut without deforming a cut surface and having superior operability and portability.

The above describe problems can be solved by solution means described later.

The cutting tool of the present invention comprises: a main body in which a piston capable of being reciprocally moved is accommodated; and a tool head being connected to the main body near the piston, the tool head includes: a fixed jaw section having a front end part to which a first die is connected and fixed; a movable jaw section having a front end part to which a second die is provided, the second die being rotatably connected to the fixed jaw section by a connecting shaft; a blade body being capable of cutting an object to be cut, which is clamped between the first die and the second die, by a pressing force of the piston; a spring for biasing the first die and the second die in a direction of relatively moving close to each other; and a connecting section connecting the blade body to the piston, and the connecting section has a first guide roller, which is capable of contacting the fixed jaw section, and a second guide roller, which is capable of contacting the movable jaw section.

With the above described structure, fixing and cutting the object can be performed, in a series of actions, by a linear motion of the piston, so that the object can be cut without deforming or crushing a cut surface of the object. Therefore, deburring and shaping the cut surface are not required, so that a time of cutting work can be shortened. Further, the cutting work can be easily performed with one hand. For example, when attaching the object to be cut, the first die and the second die can be easily opened by pushing the rear end part of the movable jaw section, against elasticity of the spring, with a fingertip of the one hand in a state where the main body is held by the one hand. Further, the pair of dies can be easily closed to clamp the object, by the elasticity of the spring, by merely leaving the fingertip from the rear end part of the movable jaw section. When the blade body cuts the object, a locking state where the pair of dies are closed can be maintained by the guide rollers provided to the connecting section.

### Advantageous Effects of Invention

In the present invention, the object to be cut can be cut with fixing the object, so that the object can be cut without deforming and crushing the cut surface, and the cutting tool having superior operability and portability can be realized.

### Brief Description of Drawings

Fig. 1 is a schematic perspective view of a cutting tool relating to an embodiment of the present invention, in which a state of clamping a trolley wire is seen from a front side.
Fig. 2 is a perspective view of the cutting tool shown in Fig. 1 seen from a rear side.
Fig. 3A is a schematic front view of the cutting tool shown in Fig. 1, in which a movable jaw section is opened; a schematic front view of the cutting tool shown in Fig. 1, in which the movable jaw section is closed; and Fig. 3C is a schematic front view of the cutting tool shown in Fig. 1, in which the movable jaw section is closed and the object is cut by a blade body.
Fig. 4A is a schematic rear view of the cutting tool shown in Fig. 3A; Fig. 4B is a schematic rear view of the cutting tool shown in Fig. 3B; and Fig. 4C is a schematic rear view of the cutting tool shown in Fig. 3C.

### Description of Embodiments

Embodiments of the present invention will now be described in detail with reference to the drawings. Note that, in the drawings, structural elements having the same function are assigned the same symbol, and repetitive explanation will be omitted.

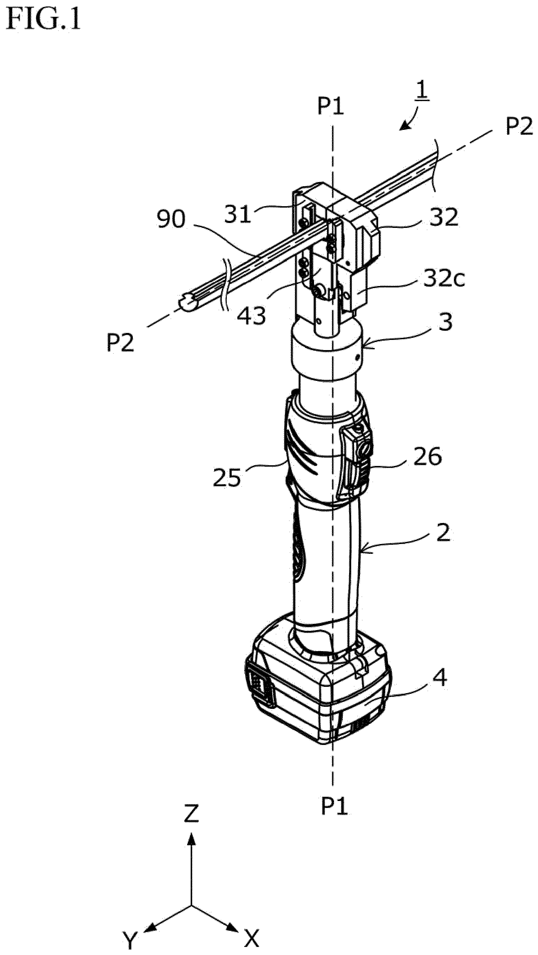

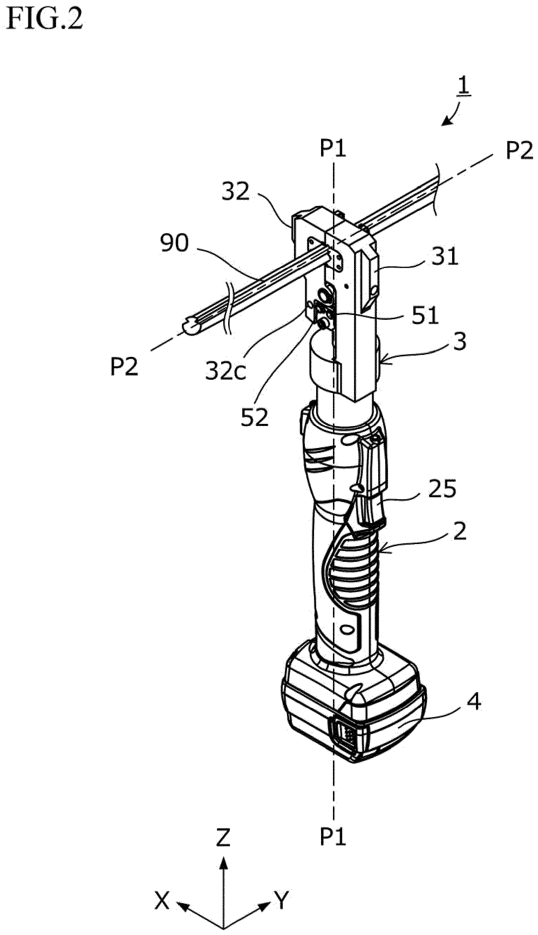

As shown in Figs. 1 and 2, a cutting tool 1 of the present embodiment comprises: a main body 2 in which a piston 21 capable of reciprocally moving is accommodated; and a tool head 3 being detachably attached to the main body 2 near the piston 21. An electric fluid pump and a cylinder (not shown) are included in the main body 2, and a battery 4 is detachably attached to the main body 2. The fluid pump is actuated by electric power supplied from the battery 4, and the piston 21 is pushed and moved by pressure of a fluid supplied into the cylinder from the fluid pump. The fluid pump is controlled by a control circuit included in the main body 2. For example, the fluid pump may be a hydraulic pump.

In the cutting tool 1, the pressure of the fluid in the cylinder is increased by pushing a start switch 25 of the main body 2, so that the piston 21 is moved forward. On the other hand, by pushing a return switch 26 of the main body 2, a fluid passage tube in the main body 2 is opened and the fluid returns to a tank in the main body 2, so that the pressure of the fluid in the cylinder is reduced and the piston 21 is moved backward. With this structure, the cutting tool can be easily brought to a workplace, and workload of an operator can be reduced.

To easily explain positional relation between sections of the cutting tool 1, arrows X, Y and Z are shown in the drawings. The piston 21 is capable of reciprocally moving along a center line P1 (i.e., moving forward in the direction Z and moving backward in the opposite direction with respect to the direction Z). For example, a case of cutting a trolley wire 90, which is an example of an object to be cut, will be explained.

In the cutting tool 1 of the present embodiment, a female die corresponding to the trolley wire 90, i.e., the object to be cut, is constituted by a first die 41 and a second die 42. The first die 41 is detachably attached to a fixed jaw section 31, and the second die 42 is detachably attached to a movable jaw section 32. A blade body 43 is guided in a travelling direction by guide sections 61, 62 and 63. The first guide section 61 is fixed to the first die 41, and the second guide section 62 is fixed to the second die 42.

In the trolley wire 90, i.e., the object, grooves for suspending with a hunger are symmetrically formed with respect to an axial line P2. In the cutting tool 1, the trolley wire 90 is cut by the blade body 43 after attaching the trolley wire 90 to the pair of dies (i.e., the first die 41 and the second die42), which can be symmetrically divided with respect to a plane along the axial line P2 of the trolley wire 90. The axial line P2 of the trolley wire 90 (the direction Y) perpendicularly intersects with the center line P1 (the direction Z).

The tool head 3 includes the fixed jaw section 31 and the movable jaw section 32 which is rotatably connected to the fixed jaw section 31. For example, the fixed jaw section 31 and the movable jaw section 32 are connected by a hinge mechanism, and the jaw sections are opened and closed by rotating or turning the movable jaw section 32 about a connecting shaft 33.

The first die 41 is detachably attached to a front end part (an arrow Z side) of the fixed jaw section 31, and the second die 42 is detachably attached to a front end part (the arrow Z side) of the movable jaw section 32. The first die 41 and the second die 42 are composed of tool steel, e.g., alloy tool steel, carbon tool steel, such as SKS3. The first die 41 and the second die 42 constitute a dividable pair of dies, which are symmetrically arranged with respect to the center line P1, and a female die corresponding to an outer peripheral shape of the trolley wire 90 is constituted by combining the first die 41 and the second die 42.

In the present embodiment, the prescribed first die 41 and the prescribed second die 42 are respectively attached to the fixed jaw section 31 and the movable jaw section 32 according to specifications of the trolley wire 90, e.g., shape. For example, the first die 41 and the second die 42 are attached by fitting ball-plungers, which are respectively provided to the first die 41 and the second die 42, into counterbores, which are respectively formed in the fixed jaw section 31 and the movable jaw section 32. Further, other known connection means, e.g., male screw-female screw, bolt-nut, may be employed.

A rear end part of the blade body 43 (a part located closer to the piston 21 than the connecting shaft 33) is connected to a front end part of the piston 21 by a connecting section 45. The blade body 43 is detachably attached to the connecting section 45. For example, the blade body 43 is attached by screwing a male screw of the blade body 43 with a female screw of the connecting section 45. Other known connection means, e.g., bolt-nut, may be employed. In the connecting section 45, a first guide roller 51 capable of contacting the fixed jaw section 31 is provided, and a second guide roller 52 capable of contacting the movable jaw section 32 is provided.

In the present embodiment, a spring 44 for biasing the first die 41 and the second die 42 in a direction of relatively moving close to each other (in the direction of the center line P1) is provided. For example, the spring 44 is a tension coil spring, and its both ends are respectively connected to the fixed jaw section 31 and the movable jaw section 32. The both ends of the tension coil spring 44 are located at positions located closer to the front end parts of the fixed jaw section 31 and the movable jaw section 32 than the connecting shaft 33, and the elasticity of the spring 44 relatively moves the first die 41 and the second die 42 close to each other. In another embodiment, the spring 44 may be a torsion coil spring, which penetrates through the connecting shaft 33 and whose both ends are respectively connected to the fixed jaw section 31 and the movable jaw section 32 which are linked by a hinge structure so as to bias the first die 41 and the second die 42 in the direction of relatively moving close to each other. Note that, the spring 44 is not limited to the tension coil spring and the torsion coil spring, so other spring means, e.g., pinch ring, plate spring, rubber spring, may be employed.

In the present embodiment, a part of the movable jaw section 32, which is located on the rear side with respect to the connecting shaft 33, acts as a lever 33C for pushing toward the fixed jaw section 31. For example, the rear end part of the movable jaw section 32 (the opposite side with respect to the arrow Z) is extended to form the lever 33C. The lever 33C may be formed into a plate shape or a rod shape which can be pushed by a finger. In another embodiment, the lever 33C may be provided to a rear end part of the movable jaw section 32. By employing the lever 33C, a pushing force for pushing the rear end part of the movable jaw section 32, against the elasticity of the spring 44, can be reduced because of the principle of leverage, so that the cutting tool 1 can be easily operated by a finger.

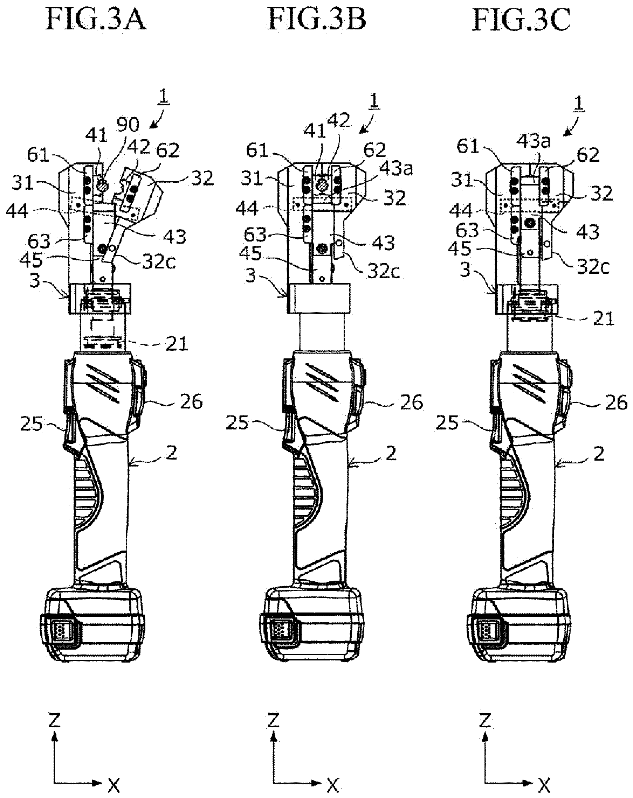

The blade body 43 is composed of tool steel, e.g., alloy tool steel, carbon tool steel, such as SKS3. In an example shown in Fig. 3C, a blade edge 43a is formed into a straight shape. The straight blade body 43 is perpendicularly arranged with respect to the axial line P2 and arranged in the direction of the center line P1, so that the trolley wire 90 can be perpendicularly cut.

Note that, the shape of the blade edge is not limited to the straight shape. For example, the blade edge may be formed into a crescent shape, and the blade edge may be an oblique knife edge, whose part on the movable jaw section 32 side is projected at a position closer to a front end part of the tool head 3 than the fixed jaw section 31.

The tool head 3 includes a plurality of groove-shaped guide sections 61, 62 and 63 for guiding the blade body 43 in the travelling direction (in the direction Z). In the present embodiment, the first guide section 61 is fixed to the first die 41, the second guide section 62 is fixed to the second die 42, and the third guide section 63 is fixed to the fixed jaw section 31.

In the tool head 3, guide rollers 51 and 52 are provided to the connecting section 45. The guide rollers 51 and 52 are composed of a hard metal, e.g., steel. stainless steel. In the present embodiment, the first guide roller 51 contacts a surface of the fixed jaw section 31 near the center line P1. The second guide roller 52 contacts a surface of the rear end part (near the lever 33C) of the movable jaw section 32, near the center line P1, at a position where the blade body 43 is capable of cutting the trolley wire 90, i.e., the object to be cut. With this structure, when the blade body 43 cuts the trolley wire 90, i.e., the object to be cut, which is clamed by the first die 41 and the second die 42, the fixed jaw section 31 and the movable jaw section 32 are locked and prohibited to open, so that the trolley wire 90, i.e., the object to be cut, can be cut in the locked state. Then, the blade body 43 is moved backward from the first die 41 and the second die 42, and the first guide roller 51 and the second guide roller 52 are moved backward, so that the locked state is released. Therefore, the cutting work can be stably and securely performed.

Next, a process of cutting the trolley wire 90, i.e., the object to be cut, will be explained.

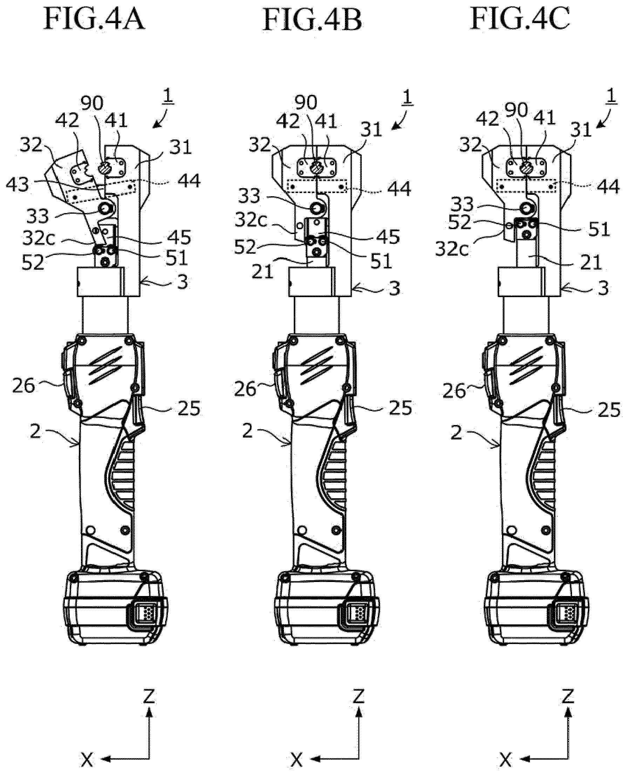

For example, the trolley wire 90, i.e., the object to be cut, is attached by steps of: holding the main body 2 with one hand; pushing the lever 33C, which is located at the rear end part of the movable jaw section 32, against the elasticity of the spring 44, with a finger of the one hand, so as to open the pair of dies, i.e., the first die 41 and the second die 42; and attaching the trolley wire 90, i.e., the object to be cut, thereto (see Figs. 3A and 4A). Then, the pair of dies (the first die 41 and the second die 42) are closed, by the elasticity of the spring 44, by releasing the finger from the lever 33C (see Figs. 3B and 4B).

When releasing the finger from the lever 33C or after releasing the finger from the lever 33C, the starting switch 25 is pushed by grasping the main body 2, then the fluid pump is actuated by the control circuit included in the main body 2 and the blade body 43 is moved forward in the direction Z by pressing force of the piston 21. At this time, the guide roller 51 contacts the fixed jaw section 31, so the blade body 42 is linearly moved with being guided by the first guide roller 51. Next, the second guide roller 52 contacts the rear end part of the movable jaw section 32 immediately before a blade edge 43a of the blade body 43 contacts the trolley wire 90, i.e., the object to be cut (see Figs. 3B and 4B). Therefore, the fixed jaw section 31 and the movable jaw section 32 are closed and locked by the first guide roller 51 and the second guide roller 52 when the blade body 43 cuts the trolley wire 90, i.e., the object to be cut. Then, the trolley wire 90, i.e., the object to be cut, is cut by the blade body 43 in the state where the fixed jaw section 31 and the movable jaw section 32 are closed and locked (see Figs. 3C and 4C).

After cutting the trolley wire 90, i.e., the object to be cut, the return switch 26 of the main body 2 is pushed, so that the fluid passage tube of the hydraulic oil is opened, the hydraulic oil returns to the tank in the main body 2, the oil pressure in the cylinder is lowered, and the piston 21 is moved backward. Therefore, the blade body 43 is moved backward in the direction opposite to the direction Z, and the first guide roller 51 and the second guide roller 52 are moved backward, so that the locked state can be released. Then, the pair of dies, i.e., the first die 41 and the second die 42, are opened by pushing the lever 33C located in the rear end part of movable jaw section 32, against the elasticity of the spring 44, with the finger of the one hand holding the main body 2, so that the trolley wire 90, i.e., the object to be cut, can be detached (see Figs. 3A and 4A).

In the present embodiment, the object 90 to be cut can be cut with being fixed, so that the trolley wire 90, i.e., the object to be cut, can be cut without deforming or crushing the cut surface. Namely, the trolley wire 90, i.e., the object to be cut, can be perpendicularly cut, with respect to the axial line P2, with making the cut surface approximately flat. Further, the locking work for cutting the trolley wire 90, i.e., the object to be cut, can be easily performed with one hand, and a clearance between the blade body 43 and the trolley wire 90, i.e., the object to be cut, can be minimally retained by the first guide section 61 and the second guide section 62. Therefore, high quality cutting work can be stably and securely performed.

The cutting tool 1 of the present embodiment has superior operability and usability in a workplace. Unlike the conventional cutting tools, the locking handle is not required in the cutting tool 1 of the present embodiment, so that the tool head 3 of the cutting tool 1 can be downsized. The blade edge 43a of the blade body 43 is formed into the straight shape, so that it is easy to design such that the blade edge 43a is prohibited to project from front ends of the fixed jaw section 31 and the movable jaw section 32 when press-cutting the trolley wire 90, i.e., the object to be cut.

In the above described embodiment, the cutting tool 1 is used to cut the trolley wire 90, i.e., the object to be cut, but the present invention is not limited to the embodiment. The cutting tool 1 of the present embodiment can be used for cutting other known electric wires, e.g., overhead wire, single wire for electric supply, twisted wire for electric supply, hollow electric wire. Further, the cutting tool 1 of the present embodiment can be used for cutting metal tubes, e.g., hollow steel tube.

In the above described embodiment, the battery 4 is detachably attached to the main body 2, but the present invention is not limited to the embodiment. The battery may be built in the cutting tool, an electric power code may be connected, and a built-in battery and an electric power code may be combined. Further, the piston for moving the blade body may be actuated by a manual handle and a link mechanism.

## Claims

1. A cutting tool (1), comprising:
a main body (2) in which a piston (21) capable of being reciprocally moved is accommodated; and
a tool head (3) being connected to the main body (2) near the piston (21),
wherein the tool head (3) includes:
a fixed jaw section (31) having a front end part to which a first die (41) is connected and fixed;
a movable jaw section (32) having a front end part to which a second die (42) is provided, the second die (42) being rotatably connected to the fixed jaw section (31) by a connecting shaft (33);
a blade body (43) being capable of cutting an object (90) to be cut, which is clamped between the first die (41) and the second die (42), by a pressing force of the piston (21);
a spring (44) for biasing the first die (41) and the second die (42) in a direction of relatively moving close to each other; and
a connecting section (45) connecting the blade body (43) to the piston (21), and
wherein the connecting section (45) has a first guide roller (51), which is capable of contacting the fixed jaw section (31), and a second guide roller (52), which is capable of contacting the movable jaw section (32).

2. The cutting tool (1) according to claim 1,
wherein the first guide roller (51) contacts the fixed jaw section (31), and
the second roller (52) contacts a rear end part of the movable jaw section (32) at a position where the blade body (43) is capable of cutting the object (90) clamped by the first die (41) and the second die (42).

3. The cutting tool (1) according to claim 1 or 2,
wherein a lever (33C) for pushing the front end part of the movable jaw section (32) toward the fixed jaw section (31) is formed to a rear end part of the movable jaw section (32), or the lever (33C) is provided to the rear end part of the movable jaw section (32).

4. The cutting tool (1) according to any one of claims 1 to 3,
wherein the object (90) is a trolley wire,
a female die corresponding to the trolley wire (90) is constituted by the first die (41) and the second die (42),
the first die (41) is detachably attached to the fixed jaw section (31), and the second die (42) is detachably attached to the movable jaw section (32),
a plurality of guide sections for guiding the blade body (43) in a travelling direction are further provided,
a first guide section (61) of the guide sections is fixed to the first die (41), and
a second guide section (62) of the guide sections is fixed to the second die (42).

5. The cutting tool (1) according to any one of claims 1 to 4,
wherein a fluid pump, a cylinder and a control circuit are included in the main body (2), and a battery (4) is detachably attached thereto,
an electric power is supplied from the battery (4) so as to actuate the fluid pump, and
the piston (21) is driven by pressure of a fluid supplied into the cylinder from the fluid pump.
